# EUROPEAN PATENT APPLICATION

(11) **EP 4 421 033 A1**
(43) Date of publication of application: **28.08.2024**
(21) Application number: 21961550.7
(22) Date of filing: 08.12.2021
(51) Int. Cl.: C01B 32/21, C04B 35/532

(54) **METHOD OF PRODUCING CARBON GRAPHITE PRODUCTS**

(30) Priority: 21.10.2021 RU 2021130743
(71) Applicant: Joint Stock Company "Rosenergoatom", Moscow 109507 (RU); "Luch Research and Production Association, Research and Development Institute, Jointstock Company ("Luch JSC"), Moskovskaya oblast, g. Podol'sk 142103 (RU); Science and Innovations - Nuclear Industry Scientific Development, Private Enterprise, Moscow, 119017 (RU)
(72) Inventor: LYSENKO, Evgeniy Konstantinovich, g. Podol'sk, 142110 (RU); FEDIN, Oleg Igorevich, g. Podol'sk, 142115 (RU); MARUSHKIN, Dmitriy Valeryevich, g. Podol'sk, 142108 (RU); CHERKASOV, Alexandr Sergeevich, g. Podol'sk, 142100 (RU); CHUMAK, Lesya Grigoryevna, g. Podol'sk, 142100 (RU)
(74) Representative: Osmans, Voldemars
(86) International application number: PCT/RU2021/000550
(87) International publication number: WO 2023/068964

(57) **Abstract**

The invention relates to the production of carbon items, namely to a technology of their processing during firing, and can be used in various branches of technology for the manufacture of electrodes, crucibles, heaters, as well as materials for nuclear engineering, for example, uranium-graphite fuel elements. In the method for producing carbon-graphite items, comprising placing workpieces in a container with a fill and firing them in an air atmosphere, according to the invention, the fill of the container is urea which is loaded in an amount of 5-10 wt.% of the workpieces. The container is placed in a closed vessel with limited access of air which is filled with a carbon fill also containing urea in an amount of 5-10 wt.% of the fill. The object of the invention and the technical result achieved by using the invention is simplification of the firing process and improvement of the quality of carbon-graphite items, especially small-sized ones, due to the exclusion of their oxidation and coking up of the fill.

## Description

### TECHNICAL FIELD OF THE INVENTION

The invention relates to the production of carbon items, namely to a technology of their processing during firing, and can be used in various branches of technology for the manufacture of electrodes, crucibles, heaters, as well as materials for nuclear engineering, for example, uranium-graphite fuel elements.

### PRIOR ART

The process of production of carbon-graphite items consists of several process operations, including firing, which takes a special place in the production of carbon-graphite items. The main process in the firing of "green" workpieces is the formation of a cementing coke lattice from a binder. This involves thermal destruction of the binder, formation of semi-coke from it, and its subsequent transformation into coke. Firing determines the quality and performance properties of carbon-graphite items. The quality of obtained carbon-graphite items depends, to a great extent, on their oxidation degree during firing.

It is known that in oxidizing environments carbon-graphites are stable at relatively low temperatures (up to 400 °C), but at high temperatures they enter into reactions relatively easily. Depending on the environment, the temperature of the beginning of a noticeable interaction with graphite can vary significantly. For example, the reaction with air oxygen begins at 400 °C, and with carbon dioxide - at a temperature of 500 °C (Levashova A.I., Kravtsov A.V. Chemical Technology of Carbon Materials: Textbook. - Tomsk: TPU Publishing House, 2008. - page 14). Besides, during firing oxidized and non-oxidized parts of carbon-graphite workpieces undergo different magnitude of shrinkage, which inevitably leads to cracks and destruction. Therefore, the firing temperature range of 400-600 °C requires the most responsible approach to the choice of gaseous environment.

To ensure the quality of the firing process, indirect heating of items through a wall is used. However, in the vast majority of cases this is not enough. This problem is solved by placing carbon-graphite workpieces in a packing material (fill) which partially protects the item from oxidation and deformation, more evenly distributes the temperature field in the volume of a heating chamber, thus reducing the temperature gradient, influences the composition and pressure of the gas atmosphere in a furnace (Levashova A.I., Kravtsov A.V. Chemical Technology of Carbon Materials: Textbook. Tomsk, TPU Publishing House, 2008, page 72). Crushed metallurgical coke or a mixture of anthracite and river sand is used as the fill.

There is a known method of producing carbon-graphite items, consisting in that their heat treatment is carried out with periodic reduction of the temperature of firing of the items in the areas of phase transitions of the binder (RU 2230380, IPC G21C 21/02 (2000.01), publ. 10.06.2004). Such firing requires heat treatment in an inert or reducing atmosphere, which complicates the hardware design of the process.

There is a known method of producing carbon-graphite items, according to which the items are fired in a container under pressure of releasing volatile gases (SU 865789, IPC C01B 31/04 (2000.01), publ. 23.09.1981). The disadvantage of this method is that when pressing a workpiece into a container and subsequent heat treatment, the pressure of releasing volatile gases reaches several tens of atmospheres. In addition, it is required to make a special individual container, which makes it problematic to use the method for mass production of items.

The closest in technical essence and solved problem is a method of producing carbon-graphite items, including placement of carbon-graphite workpieces in a container with a carbon fill between the workpieces and the walls of the container and subsequent firing of the workpieces and graphitization in a tightly closed container under pressure of releasing volatiles (GB 759160, IPC C04B 35/532, publ. 17.10.1956). This method is quite effective in obtaining large-sized items when the amount of air contained in the fill is insufficient to noticeably oxidize the surface of a fired workpiece. However, such firing of small-sized workpieces in the presence of the fill leads to their partial oxidation and cocking up of the fill to the surface of the obtained items. In addition, firing in a sealed container at a high temperature and a high pressure (tens of atmospheres) complicates the hardware design of the process.

### ESSENCE OF THE INVENTION

The object of the invention and the technical result achieved by using the invention is simplification of the firing process and improvement of the quality of carbon-graphite items, especially small-sized ones, due to the exclusion of their oxidation and coking up of the fill.

The stated object is solved by that in the method for producing carbon-graphite items, comprising placing workpieces in a container with a fill and firing them in an air atmosphere, according to the invention, the fill of the container is urea which is loaded in an amount of 5-10 wt.% of the workpieces; the container is placed in a closed vessel with limited access of air which is filled with a carbon fill also containing urea in an amount of 5-10 wt.% of the fill.

### DETAILS CONFIRMING THE FEASIBILITY OF EMBODIMENT OF THE INVENTION

In particular embodiments of the invention:
- graphlex or graphite is used as a material of the container for the workpieces;
- petroleum granulated coke is used as the carbon fill;
- the workpieces are fired at heating to a temperature of 750-800 °C.

Urea ((NH2)2CO) is added to the carbon fill and the container with fired samples to provide (create) a protective atmosphere during firing. When heated to 150 °C or higher, urea decomposes to form ammonia and carbon dioxide. Carbon dioxide, in turn, at temperatures > 500°C interacts with carbon to form carbon monoxide by reaction:

C + CO2 = 2CO

The formed carbon oxide and ammonia act as a protective atmosphere preventing oxidation of the fired samples.

The proposed method of firing carbon-graphite workpieces was tested on "green" workpieces obtained by pressing a mixture of graphite powder with phenol-formaldehyde resin.

Implementation of the method.

Workpieces with a size of about 12.8 x 55 mm (d x l) made of a mixture of graphite powder MPG-6 (5-100 µm) and artificial graphite with a particle size ≤ 100 µm and a binder - phenol-formaldehyde resin SFP 011A in the amount of 18 wt.%, were pressed at a temperature of 70-130 °C and a pressure of 8-10 MPa.

In accordance with the claimed technical solution, the pressed "green" workpieces were placed in cylindrical containers made of graphite GMZ and graphlex which contained a urea fill in an amount of 5-10 wt.% of the loaded workpieces.

The containers with the workpieces and urea were placed in a vessel made of heat-resistant steel with limited air access, which was provided by means of a lid; they were covered with a coke fill also containing urea in an amount of 5-10 wt.% of the fill. Firing was carried out in a standard calcining muffle of SNOL 6/10 type at a heating rate of 30-50°C/hour up to a temperature of 750°C. Control sample No. 1 (see the table) was fired without adding urea. The results of firing of the carbon-graphite item samples are given in the table.

**Table**

| No. | Amount of urea, wt.% | | Item weight, g | Item weight loss, wt.% | Note |
|---|---|---|---|---|---|
| | container fill | vessel fill | | | |
| 1 | 0 | 0 | 10.1 | 11.2 | Oxidized, rough surface |
| 2 | 3.0 | 0 | 10.4 | 8.4 | Oxidized, rough surface |
| 3 | 5.0 | 10.0 | 10.3 | 6.9 | Smooth surface with no visible oxidation traces |
| 4 | 10.0 | 5.0 | 10.1 | 7.1 | Smooth surface with no visible oxidation traces |
| 5 | 15.0 | 15.0 | 10.2 | 7.0 | Smooth surface with no visible oxidation traces |
| 6 | 0 | 10.0 | 10.3 | 9.3 | Oxidized, rough surface |
| 7 | 10.0 | 0 | 10.2 | 7.9 | Oxidized, rough surface |
| 8 | 1.0 | 10.0 | 10.4 | 9.7 | Oxidized, rough surface |

The results of firing, given in the table, show a weight loss of the samples in the range of 6.9-10.2%. This weight loss of the samples is caused, to a greater extent, by pyrolysis of the binder - phenol-formaldehyde resin SFP 011A and, to a lesser extent, by partial oxidation of carbon. Since the weight loss due to thermopyrolysis of the binder is approximately the same for all samples, the degree of oxidation of the samples can be judged by the total weight loss (weight loss due to thermopyrolysis of the binder plus loss due to carbon oxidation) of the fired samples.

As can be seen from the data presented, the smallest weight loss was noted for samples Nos. 3-5 fired with the addition of 5-10 wt.% urea in the carbon fill and the containers with fired samples. After firing these samples had a smooth shiny surface with no visible traces of oxidation.

As experimental data show, going beyond the upper boundary of the claimed range of urea content in the fill leads to no noticeable change in the weight loss of items (samples), and when going beyond the lower boundary of the claimed range, there is an increase in the weight loss of samples and, accordingly, noticeable oxidation of the surface of the fired samples.

The proposed method significantly simplifies the production of carbon-graphite items, as it allows heat treatment in conventional calcining muffle furnaces without the use of inert and reducing gases and a complex aggregated system of sealing the container with fired samples, as well as it improves the quality of items by eliminating the oxidation of the surface and cocking up of the fill to their surface.

The proposed method of producing carbon-graphite workpieces can be used both in firing of "green" workpieces obtained by powder metallurgy and by impregnation of graphite and other porous ceramic materials with solutions of salts of various metals. The proposed method is especially effective in producing small-sized items which have strict requirements for the possibility of oxidation, the absence of cracks, and the condition of the surface of the items.

## Claims

1. A method for producing carbon-graphite items, comprising placing workpieces in a container with a fill and firing them in an air atmosphere, **characterized in that** the fill of the container is urea which is loaded in an amount of 5-10 wt.% of the workpieces; the container is placed in a closed vessel with limited access of air which is filled with a carbon fill also containing urea in an amount of 5-10 wt.% of the fill.

2. The method according to claim 1, **characterized in that** graphlex or graphite is used as a material of the container for the workpieces.

3. The method according to claim 1, **characterized in that** petroleum granulated coke is used as the carbon fill.

4. The method according to claim 1, **characterized in that** the workpieces are fired at heating to a temperature of 750-800 °C.
